# FASCICULE DE BREVET EUROPEEN

(11) **EP 4 494 114 B1**
(45) Date de publication et mention de la délivrance du brevet: **08.10.2025**
(21) Numéro de dépôt: 23701513.6
(22) Date de dépôt: 23.01.2023
(51) Int. Cl.: G06V 40/50, G06V 40/16, G06T 7/30, G06V 10/82

(54) **PROCEDE DE MISE EN CONFORMITE A UN STANDARD D'UNE PHOTO D'IDENTITE D'UN INDIVIDU**
VERFAHREN ZUR STANDARDISIERUNG EINES IDENTITÄTSFOTOS GEMÄSS EINER VORGEGEBENEN NORM.
METHOD FOR STANDARDIZING AN IDENTITY PHOTOGRAPH TO COMPLY WITH A GIVEN STANDARD.

(30) Priorité: 15.03.2022 FR 2202261
(43) Date de publication de la demande: 22.01.2025
(73) Titulaire: IDEMIA Public Security France, 92400 Courbevoie (FR)
(72) Inventeur: BAUDRY, Christelle, 92400 COURBEVOIE (FR); GENTRIC, Stephane, 92400 COURBEVOIE (FR)
(74) Mandataire: IPS
(86) Numéro de dépôt international: PCT/EP2023/051590
(87) Numéro de publication internationale: WO 2023/174600

(56) Documents cités:
- US-A1- 2021 019 541
- US-A1- 2022 012 846
- ZHANG HAOYU ET AL: "MIPGAN-Generating Strong and High Quality Morphing Attacks Using Identity Prior Driven GAN", IEEE TRANSACTIONS ON BIOMETRICS, BEHAVIOR, AND IDENTITY SCIENCE, IEEE, vol. 3, no. 3, 14 April 2021 (2021-04-14), pages 365 - 383, XP011863484, DOI: 10.1109/TBIOM.2021.3072349
- PARENTE R L ET AL: "Assessing Facial Image Accordance to ISO/ICAO Requirements", 2016 29TH SIBGRAPI CONFERENCE ON GRAPHICS, PATTERNS AND IMAGES (SIBGRAPI), IEEE, 4 October 2016 (2016-10-04), pages 180 - 187, XP033041876, DOI: 10.1109/SIBGRAPI.2016.033

## Description

### Domaine Technique

L'invention concerne le domaine de l'intelligence artificielle et des réseaux antagonistes génératifs pour modifier des images.

### Technique antérieure

Il est connu de l'état de la technique d'utiliser des réseaux antagonistes génératifs pour modifier une image comportant un visage de sorte à modifier une caractéristique physique dudit visage. Par exemple, il est connu par ces techniques de modifier une expression de visage, ou d'enlever ou rajouter un accessoire sur ledit visage, tel que décrit dans US2021/019541A1, ou US2022/012846A1. Il est parfois vérifié que la modification est réaliste, c'est-à-dire que le visage modifié reste en apparence celui de la même personne. Les caractéristiques géométriques principales du visage sont conservées. Relèvent également de l'arrière-plan technologique l'article de ZHANG HAOYU ET AL: "MIPGAN-Generating Strong and High Quality Morphing Attacks Using Identity Prior Driven GAN", IEEE TRANSACTIONS ON BIOMETRICS, BEHAVIOR, AND IDENTITY SCIENCE, IEEE, vol. 3, no. 3, 14 avril 2021 (2021-04-14), pages 365-383, ou de PARENTE R LET AL: "Assessing Facial Image Accordance to ISO/ICAO Requirements", 2016 29TH SIBGRAPI CONFERENCE ON GRAPHICS, PATTERNS AND IMAGES (SIBGRAPI), IEEE, 4 octobre 2016 (2016-10-04), pages 180-187.

Le problème de ces techniques connues de l'art antérieur est qu'elles ne garantissent pas l'intégrité des caractéristiques biométriques d'une personne. Même si en apparence la modification n'a pas modifié le visage de la personne, un dispositif biométrique pourrait ne plus reconnaître l'identité biométrique de la personne après modification de l'image.

Ainsi, une modification d'un visage sur une photo d'identité par une technique de l'art antérieur, pour la rendre conforme à un standard, pourrait affecter les caractéristiques biométriques dudit visage.

L'invention vise à résoudre les problèmes susmentionnés de l'état de la technique en proposant un procédé de mise en conformité à un standard d'une image d'un individu garantissant l'intégrité de caractéristiques biométriques et physiques dudit individu.

### Exposé de l'invention

L'invention porte sur un procédé de mise en conformité à un standard d'une image d'un individu dite image intermédiaire, par un calculateur, le procédé de mise en conformité comprenant une étape de première extraction de premières données biométriques de l'individu à partir de l'image de l'individu, une étape de première détermination de premières données relatives au standard à partir de l'image de l'individu, et une étape de traitement comprenant :
- une étape de modification de l'image intermédiaire en une image modifiée au moyen d'un réseau antagoniste génératif,
- une étape de deuxième détermination de deuxièmes données relatives au standard, à partir de l'image modifiée,
- une étape de contrôle de la conformité de l'image modifiée au standard à partir des deuxièmes données relatives au standard, l'image modifiée étant déterminée conforme ou non conforme,
- une étape de deuxième extraction de deuxièmes données biométriques de l'individu à partir de l'image modifiée,
- une étape de vérification de l'intégrité de l'identité biométrique par comparaison des premières données biométriques avec les deuxièmes données biométriques,

le procédé de mise en conformité comprenant une étape de validation de l'image modifiée si l'identité biométrique est intègre et que l'image modifiée est déterminée conforme, l'image modifiée étant une image finale,
le procédé de mise en conformité comprenant sinon l'étape de traitement réitérée avec pour image intermédiaire, l'image modifiée de l'itération précédente.

Selon un aspect de l'invention, le procédé de mise en conformité comprend en outre une étape de première caractérisation générant des premières données relatives à des attributs physiques à partir de l'image de l'individu, l'étape de traitement comprenant une étape de deuxième caractérisation générant des deuxièmes données relatives à des attributs physiques à partir de l'image modifiée, l'étape de vérification comprenant en outre la vérification de l'intégrité des attributs physiques par comparaison des premières données relatives aux attributs physiques avec les deuxièmes données relatives aux attributs physiques, l'image modifiée étant validée selon l'étape de validation si en outre les attributs physiques sont intègres, l'étape de traitement étant réitérée sinon.

Selon un aspect de l'invention, l'image de l'individu comprend un visage, les attributs physiques comprenant des accessoires tels que des lunettes, un masque sanitaire, et des attributs personnels tels qu'une moustache, une barbe, une marque sur la peau, une caractéristique relative à des cheveux, un âge, un genre.

Selon un aspect de l'invention, le réseau antagoniste génératif comprend un espace latent comportant une pluralité de points de données, chaque point de données étant associé à une image, l'image intermédiaire étant représentée par un point de données dont la position dans l'espace latent est fonction de caractéristiques biométriques et physiques de l'individu et de caractéristiques relatives au standard, l'image intermédiaire étant modifiée par un déplacement dans l'espace latent en fonction des premières données biométriques de l'individu et des premières données relatives au standard.

Selon un aspect de l'invention, le déplacement minimise un écart entre des paramètres courants comprenant les caractéristiques biométriques et les caractéristiques relatives au standard correspondant au point de données associé à l'image intermédiaire, et des paramètres cibles comprenant des caractéristiques biométriques cibles correspondant aux premières données biométriques et des caractéristiques cibles relatives au standard conformes avec le standard.

Selon un aspect de l'invention, les paramètres courants comprennent en outre les caractéristiques physiques correspondant au point de données associé à l'image intermédiaire et les paramètres cibles comprenant en outre des caractéristiques physiques cibles correspondant aux premières données relatives aux attributs physiques.

Selon un aspect de l'invention, l'image de l'individu comprend un visage dudit individu, le standard étant relatif aux photographies d'identité destinées à être apposées sur les documents d'identité, par exemple tel que spécifié par l'organisation ICAO.

Selon un aspect de l'invention, le standard comprend au moins un critère parmi une pose du visage, une expression du visage, un fond d'image, une ouverture d'une bouche ou d'un œil, une orientation d'un regard, une position d'un accessoire tel que des lunettes, une illumination du visage.

Selon un aspect de l'invention, l'image de l'individu est une prise de vue acquise par un dispositif d'accès à une zone à accès contrôlé.

Selon un aspect de l'invention, l'image de l'individu est une prise de vue acquise par un dispositif mobile.

L'invention porte également sur un produit programme d'ordinateur comprenant les instructions de programme mettant en œuvre les étapes du procédé de mise en conformité, lorsque les instructions de programme sont exécutées par un ordinateur.

L'invention porte également sur une unité de traitement comprenant un réseau neuronal comportant un réseau antagoniste génératif et un calculateur, le calculateur étant configuré pour mettre en conformité à un standard une image d'un individu selon le procédé de mise en conformité.

### Brève description des dessins

D'autres avantages et caractéristiques de l'invention apparaîtront à la lecture de la description et des dessins.
[Fig 1] illustre un réseau antagoniste génératif comprenant un espace latent.
[Fig 2] illustre une représentation l'espace latent.
[Fig 3] illustre une pluralité de points de données au sein de l'espace latent.
[Fig 4a] illustre les étapes du procédé de l'invention, lesdites étapes comprenant une étape de traitement.
[Fig 4b] illustre les différentes étapes de l'étape de traitement.
[Fig 5] illustre un système neuronal comprenant un calculateur, générant des premières données associées à une image d'un individu.
[Fig 6] illustre le système neuronal générant des premières données ajustées à partir d'un point de données représentant l'image de l'individu dans un espace latent.
[Fig 7] illustre le système neuronal modifiant une image intermédiaire par un déplacement dans l'espace latent.
[Fig 8] illustre le système neuronal générant des deuxièmes données à partir d'une image modifiée.

### Description des modes de réalisation

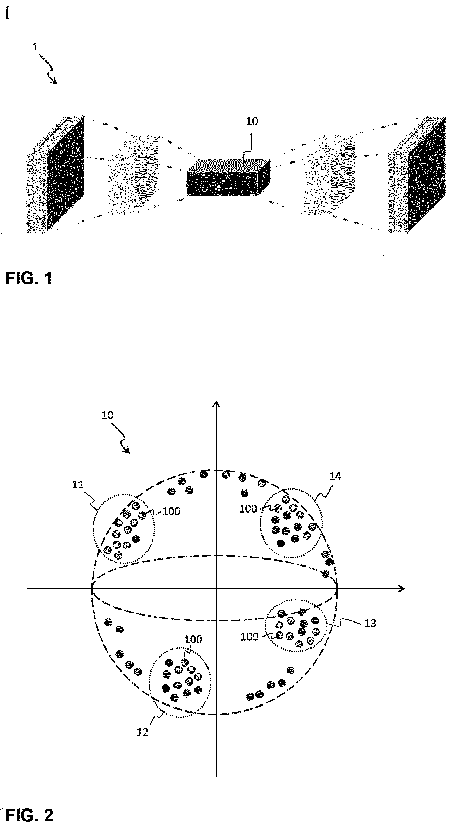

La figure 1 illustre un ensemble comprenant un réseau de neurones 2 et un réseau antagoniste génératif 1 comprenant un espace latent 10.

Un tel système est apte à modifier une image intermédiaire relative à un individu en une image modifiée au moyen du réseau antagoniste génératif 1. On entend par image intermédiaire, une image qui n'est pas conforme à un standard prédéterminé et qui doit être modifiée pour être mise en conformité audit standard.

Une image intermédiaire est par exemple une image d'un individu acquise par un dispositif de prise de vue.

Le dispositif de prise de vue est par exemple un dispositif d'accès à une zone à accès contrôlé.

Le dispositif de prise de vue est par exemple un dispositif mobile tel qu'un téléphone, une tablette, un ordinateur portable, une montre.

Une image intermédiaire est par exemple une image issue d'une image d'un individu, qui a déjà été modifiée, mais qui n'est toujours pas conforme au standard.

La figure 2 illustre une représentation de l'espace latent 10.

L'espace latent 10 comporte une pluralité de points de données issus de vecteurs générés par le réseau de neurones 2, à partir d'une bibliothèque d'images.

Un point de données est associé à une image.

Une image relative à un individu est représentée dans l'espace latent 10 par un point de données 100.

La position d'un point de données 100 dans l'espace latent 10 est fonction de caractéristiques biométriques et physiques de l'individu et de critères relatifs au standard.

Les points de données 100 sont regroupés en grappes de données 11, 12, 13, 14. Chaque grappe de données 11, 12, 13, 14 est associée une identité biométrique d'un individu.

Une grappe de données 11, 12, 13, 14 peut être plus ou moins bien définie ou étendue suivant l'identité biométrique de l'individu.

Ainsi, au sein d'une grappe de données 11, 12, 13, 14, l'identité biométrique de l'individu est la même, mais les caractéristiques physiques de l'individu et les critères relatifs au standard peuvent varier.

Un déplacement au sein d'une grappe de données 11, 12, 13, 14 dans l'espace latent 10, permet de générer via le réseau antagoniste génératif 1 associé, une image modifiée qui garantit la conservation de l'identité biométrique d'un individu, mais modifie des caractéristiques physiques de l'individu et/ou des critères relatifs au standard.

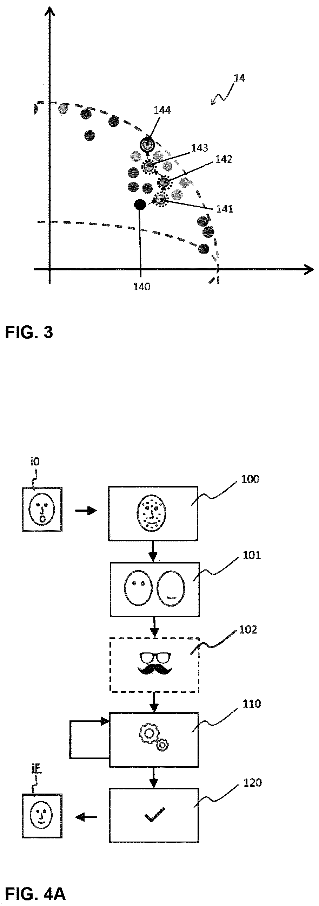

La figure 3 illustre un déplacement au sein d'une grappe de données 14, d'un point de données initial 140 vers un point de données final 144, en passant par des points de données intermédiaires 141, 142, 143.

Par exemple, l'image d'un individu acquise par un dispositif de prise de vue correspond au point de données initial 140.

Les déplacements successifs vers les points de données intermédiaires 141, 142, 143 et le point de données final 144 permet de générer des images modifiées garantissant l'intégrité de l'identité biométrique de l'individu.

Par exemple, l'image d'un individu est une photo d'identité comprenant le visage dudit individu.

Par exemple, le standard est relatif aux photographies d'identité destinées à être apposées sur des documents d'identité, en particulier tel que spécifié par l'organisation ICAO.

A l'aide du réseau antagoniste génératif 1, un calculateur est apte à modifier une photo d'identité d'un individu non conforme au standard ICAO en une photo d'identité conforme au standard ICAO, tout en conservant l'identité biométrique de l'individu, par des déplacements successifs au sein de l'espace latent 10.

Les critères relatifs au standard ICAO comprennent une pose du visage, une expression du visage, un fond d'image, une ouverture d'une bouche ou d'un œil, une orientation d'un regard, une position d'un accessoire tel que des lunettes, une illumination du visage.

Concernant le critère relatif à l'ouverture de la bouche, la bouche doit être en position fermée pour être conforme au standard ICAO

Par exemple, l'image d'un individu représentée dans l'espace latent 10 par le point de données initial 140 comprend un visage comportant une bouche en position ouverte.

Un déplacement ou plusieurs déplacements successifs dans l'espace latent 10, permettent de générer une image modifiée représentant le visage de l'individu comportant la bouche en position fermée, tout en conservant l'identité biométrique de l'individu.

En fonction du déplacement, les caractéristiques physiques de l'individu peuvent également être conservées.

Par exemple, l'image modifiée représentée dans l'espace latent 10 par le point de données final 144 est une image finale qui comprend le visage de l'individu comportant une bouche en position fermée, l'identité biométrique de l'individu étant conservée.

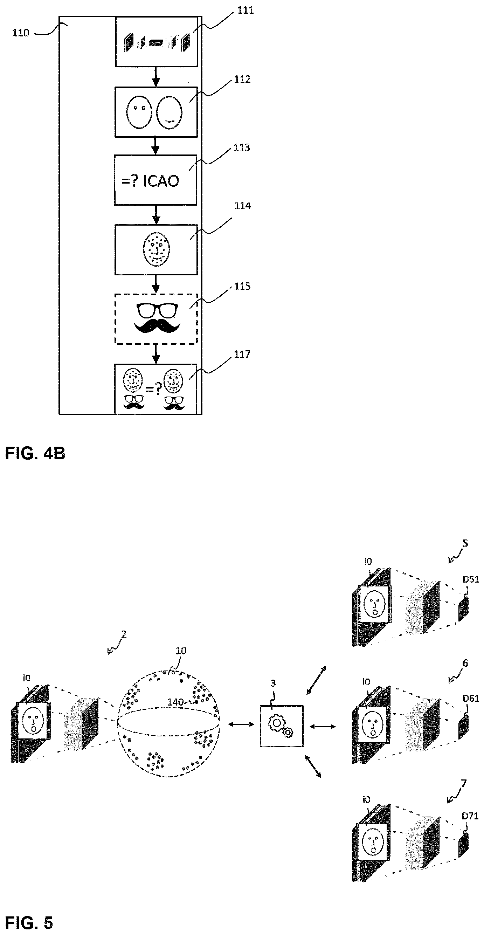

Les figures 4a et 4b illustrent les étapes du procédé de l'invention destinées à être mise en œuvre par un calculateur.

Le procédé de l'invention est un procédé de mise en conformité à un standard d'une image d'un individu i0 qui comprend une étape de première extraction 100, une étape de première détermination 101, une étape optionnelle de première caractérisation 102, une étape de traitement 110 et une étape de validation 120.

L'image de l'individu i0 est dite image intermédiaire car elle n'est pas conforme au standard et doit être modifiée pour la mise en conformité audit standard.

Selon l'étape de première extraction 100, le calculateur extrait des premières données biométriques de l'individu à partir de l'image de l'individu i0.

Par exemple, l'extraction est réalisée au moyen d'un analyseur de distances et de proportions entre des points caractéristiques du visage. Les premières données biométriques comprennent des données de distances et de proportions.

Par exemple, l'extraction est réalisée au moyen d'un analyseur d'éléments d'un visage. Les premières données biométriques comprennent des données caractéristiques associées aux yeux, au nez, aux lèvres, aux oreilles, au menton.

Par exemple, l'extraction est réalisée au moyen d'un analyseur de points particuliers d'un visage. Les premières données biométriques comprennent des données caractérisant des points prédéterminés.

Par exemple, l'extraction est réalisée à l'aide d'un réseau de neurones. Les premières données comprennent un vecteur de données.

Selon l'étape de première détermination 101, le calculateur détermine des premières données relatives au standard à partir de l'image de l'individu i0.

La détermination des premières données relatives au standard peut être réalisée par un algorithme, une analyseur d'image ou un réseau de neurones.

Par exemple, les premières données relatives au standard comprennent pour chaque critère relatif au standard, une donnée représentant la conformité ou la non-conformité au standard.

Par exemple, pour un critère d'ouverture de bouche, la position ouverte est associée à une première valeur d'une première donnée, la position fermée est associée à une deuxième valeur de la première donnée.

Par exemple, pour un critère de position d'illumination du visage, une illumination conforme au standard est associée à une première valeur d'une deuxième donnée, une illumination non conforme au standard est associée à une deuxième valeur de la deuxième donnée.

Par exemple, pour un critère de fond d'image, un fond neutre est associé à une première valeur d'une troisième donnée, un fond non neutre est associé à une deuxième valeur de la troisième donnée.

Selon une variante de réalisation, le procédé comprend une étape de première caractérisation 102.

Selon l'étape de première caractérisation 102, le calculateur génère des premières données relatives à des attributs physiques à partir de l'image de l'individu i0.

Les attributs physiques comprennent des accessoires et/ou des attributs personnels.

Parmi les accessoires, on peut citer des exemples tels que des lunettes, un masque sanitaire, un foulard, une barrette, des boucles d'oreilles, un serre-tête...

Parmi les attributs personnels, on peut citer des exemples tels qu'une moustache, une barbe, une marque sur la peau, une coiffure, une texture de cheveux, une couleur de cheveux, un âge, un genre.

La génération des premières données relatives à des attributs physiques peut être réalisée par un algorithme, une analyseur d'image ou un réseau de neurones.

Par exemple, les premières données relatives à des attributs physiques comprennent une donnée représentative de la présence ou non de lunettes et optionnellement de leur forme et/ou couleur.

Par exemple, les premières données relatives à des attributs physiques comprennent une donnée représentative de la présence ou non de barbe et/ou de moustache et optionnellement de leur forme et/ou couleur.

Par exemple, les premières données relatives à des attributs physiques comprennent une donnée représentative de la présence, de la localisation, de la couleur et/ou de la forme d'une marque sur la peau.

L'étape de de traitement 110 comprend une étape de modification 111, une étape de deuxième détermination 112, une étape de deuxième extraction 114, une étape optionnelle de deuxième caractérisation 115 et une étape de vérification 117.

Selon l'étape de modification 111, le calculateur modifie l'image intermédiaire en une image modifiée au moyen du réseau antagoniste génératif 1, en fonction des premières données biométriques de l'individu et des premières données relatives au standard.

Lorsque l'étape de modification 111 est mise en œuvre pour la première fois en vue de la mise en conformité de l'image de l'individu i0, l'image intermédiaire est l'image de l'individu i0.

Comme illustré sur les figures 2 et 3, l'espace latent 10 du réseau antagoniste génératif 1 comprend une pluralité de points de données 140, 141-143.

L'image intermédiaire correspond à un point de données 140 dans l'espace latent.

La position d'un point de données 140, 141-143 dans l'espace latent 10 est fonction de caractéristiques biométriques et physiques de l'individu et de caractéristiques relatives au standard.

Ainsi, en fonction des premières données biométriques qui sont représentatives de caractéristiques biométriques de l'individu et des premières données relatives au standard qui sont représentatives de caractéristiques relatives au standard, un déplacement au sein de l'espace latent 10 dans une direction qui tend à modifier les caractéristiques relatives au standard tout en conservant les caractéristiques biométriques de l'individu, permet de modifier l'image intermédiaire en une image modifiée en vue de la mise en conformité au standard de l'image intermédiaire, sans modification de l'identité de l'individu.

En outre, en fonction des premières données relatives à des attributs physiques qui sont représentatives de caractéristiques physiques de l'individu, un déplacement au sein de l'espace latent 10 dans une direction qui tend à modifier les caractéristiques relatives au standard tout en conservant les caractéristiques physiques de l'individu, permet de modifier l'image intermédiaire en une image modifiée en vue de la mise en conformité au standard de ladite image intermédiaire, sans modification desdits attributs physiques de l'individu.

Les premières données relatives au standard déterminées par le calculateur à partir de l'image de l'individu i0 sont représentatives de caractéristiques initiales relatives au standard. En fonction des premières données relatives au standard, le calculateur détermine des caractéristiques cibles relatives au standard à atteindre lors du déplacement dans l'espace latent 10, les caractéristiques cibles relatives au standard étant conformes au standard et étant par conséquent différentes des caractéristiques initiales relatives au standard.

Par exemple, les premières données relatives au standard comprennent une donnée représentant la non-conformité au standard pour un critère d'ouverture de bouche. Les caractéristiques cibles relatives au standard comprennent des caractéristiques conformes avec le standard et correspondant à une position fermée de bouche.

Par exemple, les premières données relatives au standard comprennent une donnée représentant la non-conformité au standard pour un critère de fond d'image. Les caractéristiques cibles relatives au standard comprennent des caractéristiques conformes avec le standard et correspondant à un fond d'image neutre.

Les premières données biométriques déterminées par le calculateur à partir de l'image de l'individu i0 sont représentatives de caractéristiques biométriques initiales de l'individu. Le calculateur détermine des caractéristiques biométriques cibles à atteindre lors du déplacement dans l'espace latent 10, les caractéristiques biométriques cibles étant identiques aux caractéristiques biométriques initiales.

Les premières données relatives à des attributs physiques générées par le calculateur à partir de l'image de l'individu i0 sont représentatives de caractéristiques physiques initiales de l'individu. Le calculateur détermine des caractéristiques physiques cibles à atteindre lors du déplacement dans l'espace latent 10, les caractéristiques physiques cibles étant identiques aux caractéristiques physiques initiales.

Le déplacement dans l'espace latent 10 est tel que le calculateur minimise un écart entre des paramètres courants comprenant les caractéristiques biométriques et les caractéristiques relatives au standard correspondant au point de données associé à l'image intermédiaire, et des paramètres cibles comprenant les caractéristiques biométriques cibles et les caractéristiques cibles relatives au standard.

Selon la variante de réalisation, le calculateur dispose de premières données relatives à des attributs physiques issues de l'étape de première caractérisation 102 et les paramètres courants comprennent en outre les caractéristiques physiques correspondant au point de données associé à l'image intermédiaire et les paramètres cibles comprennent en outre les caractéristiques physiques cibles.

Plusieurs déplacements peuvent être nécessaires pour atteindre la conformité au standard, nécessitant alors plusieurs itérations de l'étape de modification 111.

Ainsi, il est nécessaire après chaque mise en œuvre de l'étape de modification 111 de vérifier la conformité de l'image modifiée au standard.

Selon l'étape de deuxième détermination 112, le calculateur détermine des deuxièmes données relatives au standard, à partir de l'image modifiée.

Le calculateur détermine les deuxièmes données relatives au standard de la même manière et selon la même méthode qu'il détermine les premières données relatives au standard, à la différence que le calculateur le fait à partir de l'image modifiée au lieu de le faire à partir de l'image de l'individu i0.

Selon l'étape de contrôle 113, le calculateur contrôle la conformité de l'image modifiée au standard à partir des deuxièmes données relatives au standard.

L'image modifiée est déterminée conforme si elle est conforme au standard.

L'image modifiée est déterminée non conforme si elle n'est pas conforme au standard.

Il est en outre nécessaire après chaque mise en œuvre de l'étape de modification 111 de vérifier que l'identité de l'individu n'est pas altérée par le déplacement au sein de l'espace latent 10.

Par exemple, un déplacement dans l'espace latent 10 sur une grappe de données voisine altère l'identité de l'individu.

Le déplacement dans l'espace latent 10 est réalisé en fonction de paramètres cibles comprenant plusieurs caractéristiques. Il est ainsi possible sur une mise en œuvre de l'étape de modification 111 d'éloigner certaines caractéristiques de leur cible, au profit d'un rapprochement d'une autre caractéristique de sa cible.

Selon l'étape de deuxième extraction 114, le calculateur extrait des deuxièmes données biométriques de l'individu à partir de l'image modifiée.

Le calculateur extrait les deuxièmes données biométriques de la même manière et selon la même méthode qu'il détermine les premières données biométriques, à la différence que le calculateur le fait à partir de l'image modifiée au lieu de le faire à partir de l'image de l'individu i0.

Selon l'étape de vérification 117, le calculateur vérifie l'intégrité de l'identité biométrique dans l'image modifiée par comparaison des premières données biométriques avec les deuxièmes données biométriques.

Par exemple, si les deuxièmes données biométriques sont identiques aux premières données biométriques, l'identité biométrique est intègre.

Les premières données biométriques et les deuxièmes données biométriques ayant été générées de la même manière et selon la même méthode, il est facile de comparer les données pour vérifier que l'identité biométrique n'a pas été altérée.

Selon la variante de réalisation, l'étape de traitement 110 comprend en amont de l'étape de vérification 117, l'étape de deuxième caractérisation 115.

Selon l'étape de deuxième caractérisation 115, le calculateur génère des deuxièmes données relatives à des attributs physiques à partir de l'image modifiée.

Le calculateur extrait les deuxièmes données relatives à des attributs physiques de la même manière et selon la même méthode qu'il détermine les premières données relatives à des attributs physiques, à la différence que le calculateur le fait à partir de l'image modifiée au lieu de le faire à partir de l'image de l'individu i0.

Selon la variante de réalisation, l'étape de vérification 117 comprend en outre la vérification de l'intégrité des attributs physiques par comparaison des premières données relatives aux attributs physiques avec les deuxièmes données relatives aux attributs physiques. Ainsi, le calculateur vérifie l'intégrité à la fois de l'identité biométrique et des attributs physiques.

Par exemple, si les deuxièmes données relatives aux attributs physiques sont identiques aux premières données relatives aux attributs physiques, les attributs physiques sont intègres.

Suite à l'étape de traitement 110, on distingue deux cas.

Selon un premier cas, l'identité biométrique est intègre et l'image modifiée est déterminée conforme et en outre, dans le cas de la variante de réalisation, les attributs physiques sont intègres. Alors selon l'étape de validation 120, le calculateur valide l'image modifiée, l'image modifiée est une image finale iF.

Sinon, et cela correspond au deuxième cas, l'étape de traitement 110 est réitérée avec pour image intermédiaire, l'image modifiée de l'itération précédente.

Pour rappel, lors de la première mise en œuvre de l'étape de modification 111, l'image intermédiaire est l'image de l'individu i0. Lors des itérations suivantes, l'image intermédiaire est une image modifiée, et en particulier l'image modifiée de l'itération précédente.

Dans le premier cas, le but recherché est atteint. L'image finale iF est une image modifiée de l'image de l'individu i0. L'image finale iF est conforme au standard et l'identité biométrique de l'image de l'individu est conservée.

En outre, selon la variante de réalisation, il est garanti également que les attributs physiques sont intègres. L'image finale iF est une image modifiée de l'image de l'individu, conforme au standard et dont l'identité biométrique et les caractéristiques physiques sont intègres. Par exemple, si l'individu porte une barbe sur l'image de l'individu i0, la barbe est toujours présente dans l'image finale iF.

Dans le deuxième cas, l'image intermédiaire n'est toujours pas conforme au standard ou bien l'identité de l'individu a été modifiée, il est nécessaire de modifier à nouveau l'image intermédiaire et donc de réitérer l'étape de traitement 110.

En outre selon la variante de réalisation, une altération des attributs physiques n'est pas acceptable, l'image intermédiaire doit être modifiée et l'étape de traitement 110 réitérée. Par exemple, si l'individu porte une barbe sur l'image de l'individu i0 et que dans l'image modifiée la barbe n'est plus présente, le procédé de mise en conformité au standard est poursuivi, même si l'identité biométrique est intègre et que l'image modifiée est conforme au standard.

Ainsi, au moyen de plusieurs itérations de l'étape de traitement 110, l'image intermédiaire est modifiée par petits déplacements dans l'espace latent 10 du réseau antagoniste génératif 1.

Par exemple, l'étape de traitement 110 est réitérée autant de fois que nécessaire pour se trouver dans le premier cas selon lequel le calculateur valide l'image modifiée selon l'étape de validation 120, l'image modifiée étant une image finale iF.

Par exemple, l'étape de traitement 110 est réitérée un nombre maximum de fois. Si au terme de ce nombre d'itérations, l'image intermédiaire ne remplit pas les exigences du premier cas, le calculateur invalide l'image modifiée et ne génère pas d'image finale iF.

Les figures 5, 6, 7 et 8 illustrent un système neuronal comprenant :
- un calculateur 3,
- l'ensemble de la figure 1 comprenant le réseau de neurones 2 et le réseau antagoniste génératif 1 comprenant l'espace latent 10,
- un réseau de neurones biométrique 5 apte à générer des données biométriques à partir d'une image,
- un premier réseau de neurones prédictif 6 apte à générer les données relatives au standard à partir d'une image,
- un deuxième réseau de neurones prédictif 7 apte à générer des données relatives à des attributs physiques à partir d'une image.

Ce système neuronal permet au calculateur 3 de mettre en œuvre les étapes du procédé de l'invention et tel que décrit ci-après.

Tel qu'illustré sur la figure 5, le calculateur 3 génère, à partir de l'image d'un individu i0 :
- les premières données biométriques de l'individu D51, au moyen du réseau de neurones biométrique 5, selon l'étape de première extraction 100,
- les premières données relatives au standard D61, au moyen du premier réseau de neurones prédictif 6, selon l'étape de première détermination 101,
- des premières données relatives à des attributs physiques D71, au moyen du deuxième réseau de neurones prédictif 7, selon l'étape de première caractérisation 102.

Les premières données biométriques de l'individu D51 et les premières données relatives à des attributs physiques D71 sont représentatives de caractéristiques biométriques et physiques initiales de l'individu qui ne doivent pas être modifiées dans l'image finale générée en vue de la mise en conformité.

Ainsi, le calculateur 3 détermine pour caractéristiques biométriques et physiques cibles, les caractéristiques biométriques et physiques initiales qui sont associées comme déjà mentionné, aux premières données biométriques de l'individu D51 et aux premières données relatives à des attributs physiques D71.

Les premières données relatives au standard D61 correspondent à des caractéristiques initiales relatives au standard, certaines étant conformes au standard et ne devant pas être modifiées dans l'image finale, d'autres n'étant pas conformes au standard et devant être modifiées dans l'image finale.

Ainsi, le calculateur 3 détermine des caractéristiques cibles relatives au standard, qui sont conformes au standard et qui sont différentes des caractéristiques initiales relatives au standard. Les caractéristiques cibles correspondent à des données cibles relatives au standard associées au premier réseau de neurones prédictif 6.

Les données cibles représentent l'ensemble des données cibles relatives au standard, des premières données biométriques de l'individu D51 et des premières données relatives à des attributs physiques D71.

L'image de l'individu i0 est représentée par le point de données initial 140 généré par le réseau de neurones 2, dans l'espace latent 10 du réseau antagoniste génératif 1.

L'image de l'individu i0 est l'image intermédiaire destinée à être modifiée par l'étape de modification 111.

Au préalable de l'étape de modification 111, le calculateur 3 détermine des données courantes.

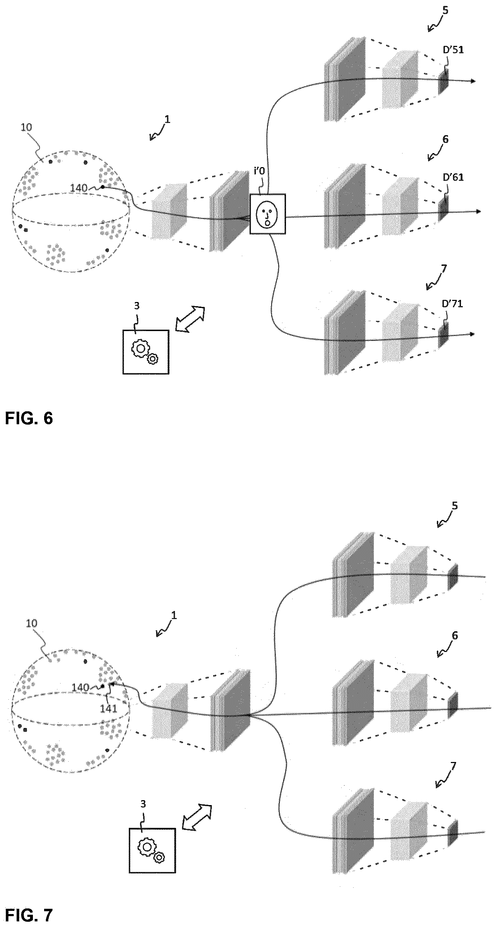

Comme représenté sur la figure 6, à partir du point de données initial 140, le réseau antagoniste génératif 1 génère une image ajustée de l'individu i'0 qui peut être légèrement différente de l'image de l'individu i0.

A partir de cette image ajustée de l'individu i'0, le calculateur 3 génère un ensemble de trois premières données ajustées :
- des premières données ajustées biométriques de l'individu D'51, au moyen du réseau de neurones biométrique 5,
- des premières données ajustées relatives au standard D'61, au moyen du premier réseau de neurones prédictif 6,
- des premières données ajustées relatives à des attributs physiques D'71, au moyen du deuxième réseau de neurones prédictif 7.

L'ensemble des données ajustées correspond à des données courantes.

Pour générer l'image modifiée selon l'étape de modification 111, le calculateur 3 calcule une distance entre les données courantes et les données cibles puis détermine un déplacement dans l'espace latent 10 vers un point de données intermédiaire 141 qui minimise cette distance par rétro-propagation dans l'ensemble neuronal, tel que représenté en figure 7.

Le déplacement ainsi déterminé minimise un écart entre des paramètres courants comprenant les caractéristiques biométrique et physiques et les caractéristiques relatives au standard correspondant au point de données associé à l'image intermédiaire (ici, l'image de l'individu i0 ou plus exactement l'image ajustée de l'individu i'0 issue de l'image de l'individu i0), et les paramètres cibles comprenant les caractéristiques cibles.

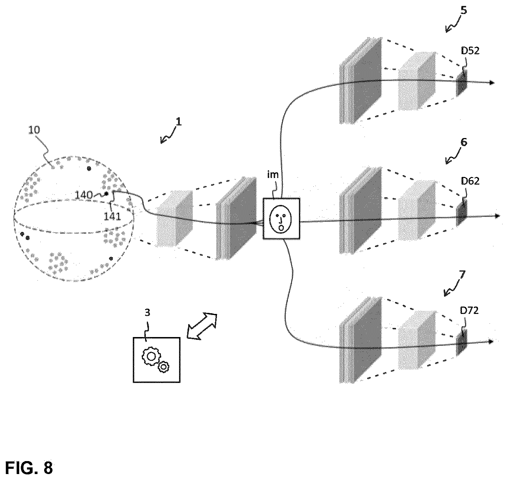

La figure 8 illustre la génération de l'image modifiée im à partir du point de données intermédiaire 141, au moyen du réseau antagoniste génératif 1.

Une fois l'image modifiée im générée, le calculateur 3 génère ensuite, à partir de l'image modifiée im :
- les deuxièmes données biométriques de l'individu D52, selon l'étape de deuxième extraction 114,
- les deuxièmes données relatives au standard D62, au moyen du premier réseau de neurones prédictif 6, selon l'étape de deuxième détermination 112,
- des deuxième données relatives à des attributs physiques D72, au moyen du deuxième réseau de neurones prédictif 7, selon l'étape de deuxième caractérisation 115.

L'ensemble des deuxièmes données correspond aux données courantes, en remplacement des précédentes données courantes qui correspondaient à l'ensemble des données ajustées.

Le calculateur 3 contrôle la conformité au standard de l'image modifiée im, à partir des deuxièmes données relatives au standard D62, l'image modifiée étant déterminée conforme ou non conforme à l'issue du contrôle, selon l'étape de contrôle 113.

Le calculateur 3 vérifie l'intégrité de l'identité biométrique par comparaison des premières données biométriques D51 avec les deuxièmes données biométriques D52 et l'intégrité des attributs physiques par comparaison des premières données relatives aux attributs physiques D71 avec les deuxièmes données relatives aux attributs physiques D72, selon l'étape de vérification 117.

Si l'identité biométrique et les caractéristiques physiques sont intègres et que l'image modifiée est conforme, alors l'image modifiée est l'image finale. Le procédé de mise en conformité est terminé.

Sinon, l'image modifiée est une image intermédiaire et le procédé se poursuit pour générer une nouvelle image modifiée, par une réitération des étapes de modification 111, de deuxième détermination 112, de contrôle 113 et de deuxième extraction 114 et de vérification 117, comme déjà décrit ci-dessus.

Ainsi, pour générer une nouvelle image modifiée selon l'étape de modification 111, le calculateur 3 calcule une distance entre les dernières données courantes et les données cibles puis détermine un déplacement dans l'espace latent 10 vers un nouveau point de données intermédiaire 142 qui minimise cette distance par rétro-propagation dans l'ensemble neuronal, de manière similaire à ce qui est représenté en figure 7.

Puis, le calculateur 3 réitère l'exécution des étapes de deuxième détermination 112, de contrôle 113 et de deuxième extraction 114 et de vérification 117.

Les étapes de modification 111, de deuxième détermination 112, de contrôle 113 et de deuxième extraction 114 et de vérification 117, sont réitérées par exemple jusqu'à obtenir une image modifiée im qui est conforme au standard et pour laquelle l'identité biométrique et les caractéristiques physiques sont intègres. L'image modifiée est alors l'image finale. Le procédé de mise en conformité est terminé.

L'avantage d'une solution à base de système neuronal est qu'il est possible au calculateur 3 de prévoir la direction dans laquelle de déplacer au sein de l'espace latent, par rétro-propagation lors de la minimisation de l'écart entre des paramètres courants et les paramètres cibles.

Cependant cette solution n'est pas limitative.

Par exemple, le calculateur 3 peut se déplacer dans l'espace latent sans connaître la direction à prendre, et par de multiples itérations de l'étape de traitement 110, apprendre comment s'y diriger pour mettre en conformité l'image d'un individu i0 conformément au procédé de l'invention.

## Revendications

1. Procédé de mise en conformité à un standard d'une image d'un individu (i0) dite image intermédiaire, par un calculateur, le procédé de mise en conformité comprenant une étape de première extraction (100) de premières données biométriques de l'individu à partir de l'image de l'individu (i0), une étape de première détermination (101) de premières données relatives au standard à partir de l'image de l'individu (i0), et une étape de traitement (110) comprenant :
- une étape de modification (111) de l'image intermédiaire en une image modifiée au moyen d'un réseau antagoniste génératif (1),
- une étape de deuxième détermination (112) de deuxièmes données relatives au standard, à partir de l'image modifiée,
- une étape de contrôle (113) de la conformité de l'image modifiée au standard à partir des deuxièmes données relatives au standard, l'image modifiée étant déterminée conforme ou non conforme,
- une étape de deuxième extraction (114) de deuxièmes données biométriques de l'individu à partir de l'image modifiée,
- une étape de vérification (117) de l'intégrité de l'identité biométrique par comparaison des premières données biométriques avec les deuxièmes données biométriques,
le procédé de mise en conformité comprenant une étape de validation (120) de l'image modifiée si l'identité biométrique est intègre et que l'image modifiée est déterminée conforme, l'image modifiée étant une image finale (iF),
le procédé de mise en conformité comprenant sinon l'étape de traitement (110) réitérée avec pour image intermédiaire, l'image modifiée de l'itération précédente.

2. Procédé de mise en conformité selon la revendication précédente, comprenant en outre une étape de première caractérisation (102) générant des premières données relatives à des attributs physiques à partir de l'image de l'individu (i0), l'étape de traitement (110) comprenant une étape de deuxième caractérisation (115) générant des deuxièmes données relatives à des attributs physiques à partir de l'image modifiée, l'étape de vérification (117) comprenant en outre la vérification de l'intégrité des attributs physiques par comparaison des premières données relatives aux attributs physiques avec les deuxièmes données relatives aux attributs physiques, l'image modifiée étant validée selon l'étape de validation (120) si en outre les attributs physiques sont intègres, l'étape de traitement (110) étant réitérée sinon.

3. Procédé de mise en conformité selon la revendication précédente, l'image de l'individu (i0) comprenant un visage, les attributs physiques comprenant des accessoires tels que des lunettes, un masque sanitaire, et des attributs personnels tels qu'une moustache, une barbe, une marque sur la peau, une caractéristique relative à des cheveux, un âge, un genre.

4. Procédé de mise en conformité selon l'une quelconque des revendications précédentes, le réseau antagoniste génératif (1) comprenant un espace latent (10) comportant une pluralité de points de données (140-144), chaque point de données (140-144) étant associé à une image, l'image intermédiaire étant représentée par un point de données (140-144) dont la position dans l'espace latent (10) est fonction de caractéristiques biométriques et physiques de l'individu et de caractéristiques relatives au standard, l'image intermédiaire étant modifiée par un déplacement dans l'espace latent (10) en fonction des premières données biométriques de l'individu et des premières données relatives au standard.

5. Procédé de mise en conformité selon la revendication précédente, le déplacement minimisant un écart entre des paramètres courants comprenant les caractéristiques biométriques et les caractéristiques relatives au standard correspondant au point de données associé à l'image intermédiaire, et des paramètres cibles comprenant des caractéristiques biométriques cibles correspondant aux premières données biométriques et des caractéristiques cibles relatives au standard conformes avec le standard.

6. Procédé de mise en conformité selon la revendication précédente lorsqu'elle est dans la dépendance de la revendication 2, les paramètres courants comprenant en outre les caractéristiques physiques correspondant au point de données associé à l'image intermédiaire et les paramètres cibles comprenant en outre des caractéristiques physiques cibles correspondant aux premières données relatives aux attributs physiques.

7. Procédé de mise en conformité selon l'une quelconque des revendications précédentes, l'image de l'individu (i0) comprenant un visage dudit individu, le standard étant relatif aux photographies d'identité destinées à être apposées sur les documents d'identité, par exemple tel que spécifié par l'organisation ICAO.

8. Procédé de mise en conformité selon la revendication précédente, le standard comprenant au moins un critère parmi une pose du visage, une expression du visage, un fond d'image, une ouverture d'une bouche ou d'un œil, une orientation d'un regard, une position d'un accessoire tel que des lunettes, une illumination du visage.

9. Produit programme d'ordinateur comprenant des instructions qui, lorsque le programme est exécuté par un ordinateur, conduisent celui-ci à mettre en œuvre les étapes du procédé de mise en conformité selon l'une quelconque des revendications 1 à 8.

10. Unité de traitement comprenant un réseau neuronal comportant un réseau antagoniste génératif et un calculateur, le calculateur étant configuré pour mettre en conformité à un standard une image d'un individu (i0) selon le procédé de mise en conformité selon l'une quelconque des revendications 1 à 8.

## Patentansprüche

1. Verfahren zur Konformitätsherstellung eines Bildes einer Person (i0), bezeichnet als Zwischenbild, durch einen Rechner, wobei das Verfahren folgende Schritte umfasst:
einen ersten Extraktionsschritt (100) zur Gewinnung erster biometrischer Daten der Person aus dem Bild (i0),
einen ersten Bestimmungsschritt (101) zur Ermittlung erster Daten in Bezug auf den Standard aus dem Bild (i0),
und einen Verarbeitungsschritt (110), der umfasst:
- einen Schritt zum Modifizieren (111) des Zwischenbildes zu einem modifizierten Bild mittels eines generativen antagonistischen Netzwerks (1),
- einen zweiten Bestimmungsschritt (112) von zweiten Daten, die sich auf den Standard beziehen, ausgehend von dem modifizierten Bild,
- einen Schritt (113) zum Prüfen der Übereinstimmung des modifizierten Bildes mit dem Standard anhand der zweiten Daten, die sich auf den Standard beziehen, wobei das modifizierte Bild als übereinstimmend oder nicht übereinstimmend bestimmt wird,
- einen zweiten Schritt (114) zum Extrahieren zweiter biometrischer Daten der Person aus dem modifizierten Bild,
- einen Schritt zum Überprüfen (117) der Integrität der biometrischen Identität durch Vergleichen der ersten biometrischen Daten mit den zweiten biometrischen Daten,
wobei das Verfahren einen Validierungsschritt (120) des geänderten Bildes umfasst, wenn die biometrische Identität intakt ist und das geänderte Bild als konform bestimmt wird, wobei das geänderte Bild ein endgültiges Bild (iF) ist,
wobei das verfahren andernfalls den Verarbeitungsschritt (110) umfasst, der mit dem geänderten Bild aus der vorherigen Iteration als Zwischenbild wiederholt wird.

2. Verfahren nach dem vorherigen Anspruch, das außerdem einen ersten Charakterisierungsschritt (102) umfasst, der erste Daten zu physischen Merkmalen aus dem Bild der Person (i0) generiert, wobei der Verarbeitungsschritt (110) einen zweiten Charakterisierungsschritt umfasst (115) Erzeugen von zweiten Daten, die sich auf physikalische Merkmale beziehen, aus dem modifizierten Bild, wobei der Überprüfungsschritt (117) ferner die Überprüfung der Integrität der physikalischen Merkmale durch Vergleich der ersten Daten über die physikalischen Merkmale mit den zweiten Daten über die physikalischen Merkmale umfasst, wobei das modifizierte Bild gemäß dem Validierungsschritt (120) validiert wird, wenn außerdem die physikalischen Merkmale intakt sind, andernfalls wird der Verarbeitungsschritt (110) wiederholt.

3. Verfahren nach dem vorherigen Anspruch, wobei das Bild der Person (i0) ein Gesicht umfasst, die physischen Merkmale Accessoires wie Brillen, eine Gesichtsmaske und persönliche Merkmale wie einen Schnurrbart, einen Bart, eine Hautmarkierung, ein Merkmal in Bezug auf die Haare, das Alter und das Geschlecht.

4. Verfahren nach einem der vorhergehenden Ansprüchen umfasst das generative Antagonistennetzwerk (1) einen latenten Raum (10) mit einer Vielzahl von Datenpunkten (140-144), wobei jeder Datenpunkt (140-144) einem Bild zugeordnet ist, wobei das Zwischenbild durch einen Datenpunkt (140-144) dargestellt wird, dessen Position im latenten Raum (10) von biometrischen und physischen Merkmalen der Person abhängt und Verschiebung im latenten Raum (10) in Abhängigkeit von den ersten biometrischen Daten der Person und den ersten Daten in Bezug auf den Standard verändert wird.

5. Verfahren nach dem vorherigen Anspruch, wobei die Verschiebung eine Abweichung zwischen aktuellen Parametern minimiert, die Folgendes umfassen biometrische Merkmale und die Standardmerkmale, die dem mit dem Zwischenbild verbundenen Datenpunkt entsprechen, und Zielparameter, die Zielbiometrische Merkmale, die den ersten biometrischen Daten entsprechen, und Standardzielmerkmale, die dem Standard entsprechen, umfasst.

6. Verfahren nach dem vorherigen Anspruch, abhängig von Anspruch 2, wobei die aktuellen Parameter zusätzlich die physikalischen Merkmale umfassen, die dem mit dem Zwischenbild verbundenen Datenpunkt entsprechen, und die Zielparameter zusätzlich die physikalischen Zielmerkmale umfassen, die den ersten Daten entsprechen den physikalischen Merkmale entsprechen.

7. Verfahren nach einem der vorstehenden Ansprüche, wobei das Bild der Person (i0) ein Gesicht der Person umfasst und der Standard sich auf Passfotos bezieht, die auf Ausweisdokumenten angebracht werden sollen, beispielsweise wie in ICAO-Organisation festgelegt.

8. Verfahren nach dem vorherigen Anspruch, wobei der Standard mindestens eines der folgenden Kriterien umfasst: Gesichtsausdruck, Hintergrund des Bildes, Öffnung von Mund oder Augen, Blickrichtung, Position von Accessoires wie Brillen, Beleuchtung des Gesichts.

9. Computerprogrammprodukt mit Anweisungen, die bei Ausführung durch einen Rechner diesen veranlassen, die Schritte des Verfahrens gemäß einem der Ansprüche 1 bis 8 auszuführen..

10. Verarbeitungseinheit mit einem neuronalen Netzwerk, das ein generatives gegnerisches Netzwerk und einen Rechner umfasst, wobei der Rechner konfiguriert ist, ein Bild einer Person (i0) gemäß dem Verfahren nach einem der Ansprüche 1 bis 8 an einen Standard anzupassen.

## Claims

1. A compliance method for bringing an image of an individual (i0), referred to as an intermediate image, into conformity with a standard, by means of a computer, the compliance method comprising a first extraction step (100) of first biometric data from the image of the individual (i0), a first determination step (101) of first data relating to the standard from the image of the individual (i0), and a processing step (110) comprising:
- a modification step (111) of the intermediate image into a modified image by means of a generative adversarial network (1),
- a second determination step (112) of second data relating to the standard, based on the modified image,
- a step (113) of checking the conformity of the modified image to the standard based on the second data relating to the standard, the modified image being determined to be conforming or non-conforming,
- a second extraction step (114) of second biometric data from the individual from the modified image,
- a verification step (117) of the integrity of the biometric identity by comparing the first biometric data with the second biometric data,
the compliance method comprising a validation step (120) of the modified image if the biometric identity is intact and the modified image is determined to be compliant, the modified image being a final image (iF),
the compliance method otherwise comprising the processing step (110) repeated with the modified image from the previous iteration as the intermediate image.

2. A compliance method according to the previous claim, further comprising a first characterisation step (102) generating first data relating to physical attributes from the image of the individual (i0), the processing step (110) comprising a second characterisation step (115) generating second data relating to physical attributes from of the modified image, the verification step (117) further comprising verifying the integrity of the physical attributes by comparing the first data relating to the physical attributes with the second data relating to the physical attributes, the modified image being validated according to the validation step (120) if, in addition, the physical attributes are intact, the processing step (110) being repeated otherwise.

3. A compliance method according to the previous claim, wherein the image of the individual (i0) includes a face, the physical attributes include accessories such as glasses, a face mask, and personal attributes such as a moustache, a beard, a mark on the skin, a hair characteristic, age, and gender.

4. A compliance method according to any of the
the preceding claims, the generative adversarial network (1) comprising a latent space (10) having a plurality of data points (140-144), each data point (140-144) being associated with an image, the intermediate image being represented by a data point (140-144) whose position in the latent space (10) is a function of biometric and physical characteristics of the individual and of relative to the standard, the intermediate image being modified by a displacement in the latent space (10) as a function of the first biometric data of the individual and the first data relative to the standard.

5. A compliance method according to the preceding claim, wherein the displacement minimises a deviation between current parameters comprising the biometric characteristics and standard-related characteristics corresponding to the data point associated with the intermediate image, and target parameters comprising target biometric characteristics corresponding to the first biometric data and target standard-related characteristics in accordance with the standard.

6. A compliance method according to the previous claim when dependent on claim 2, the current parameters further comprising physical characteristics corresponding to the data point associated with the intermediate image and the target parameters further comprising target physical characteristics corresponding to the first data relating to physical attributes.

7. A compliance method according to any of the preceding claims, wherein the image of the individual (i0) includes a face of said individual, the standard being related to identity photographs intended to be affixed to identity documents, for example as specified by the ICAO organisation.

8. A compliance method according to the preceding claim, wherein the standard comprises at least one criterion from among a facial pose, a facial expression, an image background, an opening of a mouth or an eye, a gaze direction, a position of an accessory such as glasses, an illumination of the face.

9. A computer program product comprising instructions which, when executed by a computer, cause the computer to perform the steps of the compliance method according to any of claims 1 to 8.

10. A processing unit comprising a neural network having a generative antagonistic network and a computer, the computer being configured to conform an image of an individual (i0) to a standard according to the compliance method according to any of claims 1 to 8.
